# EUROPEAN PATENT APPLICATION

(11) **EP 3 287 634 A1**
(43) Date of publication of application: **28.02.2018**
(21) Application number: 17001408.8
(22) Date of filing: 17.08.2017
(51) Int. Cl.: F03B 13/18

(54) **WAVE POWER GENERATION APPARATUS**

(30) Priority: 24.08.2016 TW 105127061
(71) Applicant: Liao, Fang Ying, New Taipei City 22143 (TW); Liao, Yu-Seng, 22143 New Taipei City (TW); Liao, Hsuan Hsien, New Taipei City 22143 (TW)
(72) Inventor: Liao, Jen-Li, 22143 New Taipei City (TW); Liao Hu, Wen-Hua, 22143 New Taipei City (TW); Liao, Hsuan-Hsien, 22143 New Taipei City (TW); Liao, Fang-Ying, 22143 New Taipei City (TW); Liao, Yu-Seng, 22143 New Taipei City (TW)
(74) Representative: Zeitler Volpert Kandlbinder Patent- und Rechtsanwälte Partnerschaft mbB

(57) **Abstract**

A wave power generation apparatus includes: a rack device(10) having plural columns(11), and the bottom of the column(11) being fixed to a nearshore seabed(100); at least one linking device(20) installed on the rack device(10) and having at least one frame(21); a sliding assembly(22) installed to the frame(21) and having a longitudinally installed first sliding element(221) and a longitudinally installed second sliding element(222); a first buoy(229) connected to the bottom of the frame(21); a gear set(233) including a first gear(231) and a second gear(232); a rotating shaft(24) pass and installed to the gear set(233) and linked by the gear set(233) for a one-way rotation; a power conversion device(30) transmissively connected to the rotating shaft(24); and a power generation device(40) transmissively connected to the power conversion device(30) to generate electric power.

## Description

### FIELD OF INVENTION

The present invention relates to a power generation apparatus, in particular to a wave power generation apparatus capable of converting the up-and-down floating energy of sea/ocean waves into kinetic energy, and serially combining and concentrating the kinetic energy to be converted into electric energy by a power generator.

### BACKGROUND OF INVENTION

### 1. Description of the Related Art

At present, electric power is a main power source of our life, and various types of electric power sources are developed through coal/oil power generation, wind power generation, wave power generation, solar power generation, and even nuclear power generation. In recent years, the carbon dioxide emission is increased drastically by the excessive use of coal and oil, and thus resulting in a serious greenhouse effect becomes a serious issue. Therefore, energy saving and carbon reduction, green energy applications, prevention of nuclear disasters, and safety are important topics for the present and future development of green energy. In fact, Taiwan is surrounded by the sea, wave power generation is very good choice, and the endless stream of ocean power may be converted into electric power effectively to produce a huge economic benefit. However, it is a pity that Taiwan still cannot make a good use of this marine resource. Therefore, it is an important subject for Taiwan and other countries to take the advantage of the environment to develop reliable and stable wave generation.

The main reason for the failure of most wave power generation technologies resides on the problem of system structure, since controllers and power generators are installed altogether in a wave power generation system and the whole system is installed in oceans or seas, so that the whole system cannot be fixed and may be damaged by the waves of the sea, and the issues of corrosion and rusting cannot be overcome easily. Obviously, the conventional wave power generation requires improvements. In addition, the maintenance of the wave power generation apparatus is relatively difficult, and failure may occur easily. On the other hand, the cable for transmitting electric power is extended from the seabed to the shore, so that the cable may be damaged very easily in addition to the difficulty and the high cost of the construction. Therefore, the inventor of the present invention developed a wave power generation apparatus capable of maximizing the marine resources and the power generation efficiency to overcome the drawbacks of the conventional wave power generation apparatus.

### 2. Summary of the Invention

Therefore, it is a primary objective of the present invention to overcome the drawbacks of the prior art by providing a wave power generation apparatus capable of converting the up-and-down floating energy of sea/ocean waves into kinetic energy, and serially combining and concentrating the kinetic energy to be converted into electric energy by a power generator stably and successfully.

Another objective of the present invention is to provide a wave power generation apparatus capable of guiding the kinetic energy produced by the waves into an engine room with a confined space to generate electric power, so as to prevent important components including the power generation devices and controllers from being damaged, corroded, or rusted by sea wind and salty moisture.

To achieve the aforementioned and other objectives, the present invention provides a wave power generation apparatus comprising: a rack device, including a plurality of columns, and the bottom of the columns being fixed to a nearshore seabed, and the top of at least two columns being connected to a column connecting portion; at least one linking device, installed onto the rack device, and including at least one frame; a sliding assembly installed to the frame, and inlcuding a longitudinally installed first sliding element and a longitudianlly installed second sliding element, and a first gear slot and a second gear slot formed on opposite inner sides of the first sliding element and the second sliding element respectively; a first buoy connected to the bottom of the frame; a gear set, including a first gear and a second gear, and the first gear being engaged and connected to the first gear slot, and the second gear being engaged and connected to the second gear slot, so that the gear set is slidable in the sliding assembly; a rotating shaft, passed and installed to the gear set, and linked by the gear set for a one-way rotation; a power conversion device, transmissively connected to the rotating shaft; and a power generation device, transmissively connected to the power conversion device to generate electric power.

Wherein, the power generation device is installed on a shore.

Wherein, the frame comprises a first frame and a second frame, and the frame has at least one bearing seat for passing and positioning the rotating shaft, and an upper connecting element and a lower connecting element installed between the first sliding element and the second sliding element, and the first sliding element and the second sliding element is configured to have a deviation of a horizontal distance, and the upper connecting element is connected to a support shaft, and the support shaft is passed and positioned at a bushing of the frame, and the lower connecting element is downwardly connected to a push rod, and the bottom of the push rod is connected to the first buoy, and the gear set is a gear mechanism of a one-way transmission.

Wherein, the first buoy is made of stainless galvanized iron, and the top of the first buoy at least has a water inlet, and the bottom of the first buoy at least has a water outlet, and the exterior of the first buoy is wrapped and protected by a glass fiber portion.

Wherein, the power conversion device includes a hydraulic pump transmissively connected to the rotating shaft, and the hydraulic pump is connected to a hydraulic motor through an oil output pipe, and the hydraulic motor is connected to an oil tank through a first return pipe, and the oil tank is connected to the hydraulic pump through a second return pipe, and the hydraulic motor is connected to a power generation device through a fixing element, and the rotating shaft is extended into the hydraulic pump, and the hydraulic motor drives a shaft disposed in the fixing element, and the shaft is extended out from the hydraulic motor and into the connected power generation device to link with the power generation device to generate electric power.

Wherein, the wave power generation apparatus further comprises a plurality of linking devices, and each first buoy of the plurality of linking devices forms a second buoy.

Wherein, the wave power generation apparatus further comprises a plurality of linking devices jointly passed and installed to the rotating shaft, so that the linking devices provide a serially connected, concentrated, and strengthened effect of the rotating power produced by the rotating shaft.

Wherein, the wave power generation apparatus further comprises an engine room having a confined space and installed at a coastal shore and provided for installing the hydraulic motor, the oil tank, the power generation device and at least one control device.

Wherein, the bottom of the push rod is connected to the first buoy by a two-way socket, and the upper end of the two-way socket is pivotally connected to the bottom of the push rod, and the lower end of the two-way socket is pivotally connected to a protruding pivot of the first buoy, and the pivoting directions of both upper and lower ends of the two-way socket are perpendicular to each other.

Wherein, the rotating shaft has a flywheel installed at an end away from the hydraulic pump, so that when the rotating shaft is rotating, the flywheel will rotate synchronously.

To achieve the aforementioned and other objectives, the present invention further provides a wave power generation apparatus comprising: a tall frame, installed at a shore, and having a pressing rod pivotally installed to the top of the tall frame; a third buoy, installed in a nearshore sea, and connected to the other end of the pressing rod opposite to the tall frame; a rack device, installed at a coastal shore, and disposed between the tall frame and the third buoy; at least one linking device, installed onto the rack device, and including at least one sliding assembly, and the top of the sliding assembly being connected to the pressing rod, and the sliding assembly including a longitudinally installed first sliding element and a longitudinally installed second sliding element, and the first sliding element and the second sliding element having a first gear slot and a second gear slot formed on opposite inner sides of the first sliding elment and the second sliding elment respectively; a gear set, including a first gear and a second gear, and the first gear being engaged with the first gear slot, and the second gear being engaged with the second gear slot, so that the gear set can slide in the sliding assembly; a rotating shaft, passed and installed to the gear set, and linked by the gear set for a one-way rotation; and a power conversion device, installed at the shore, and transmissively connected to the rotating shaft; and a power generation device, installed at the shore, and transmissively connected to the power conversion device for generating electric power.

Wherein, an upper connecting element and a lower connecting element are installed between the first sliding element and the second sliding element, and the first sliding element and the second sliding element are configured to have a deviation of a horizontal distance, and the upper connecting element has a support shaft connected to the pressing rod, and the gear set is a gear mechanism of a one-way transmission.

Wherein, the third buoy is made of stainless galvanized iron, and the top of the third buoy at least has a water inlet, and the bottom of the third buoy at least has a water outlet, and the exterior of the third buoy is wrapped and protected by a glass fiber portion.

Wherein, the power conversion device includes a hydraulic pump transmissively connected to the rotating shaft, and the hydraulic pump is connected to a hydraulic motor through an oil output pipe, and the hydraulic motor is connected to an oil tank through a first return pipe, and the oil tank is connected to the hydraulic pump through a second return pipe, and the hydraulic motor is connected to a power generation device through a fixing element, and the rotating shaft is extended into the hydraulic pump, and the hydraulic motor drives a shaft disposed in the fixing element, and the shaft is extended out from the hydraulic motor and into the connected power generation device to link the power generation device to generate electric power.

Wherein, the wave power generation apparatus further comprises a plurality of linking devices with the top connected to the pressing rod, so that the linking devices form a serially connected, concentrated, and strengthened effect of the rotating power produced by the rotating shaft.

Wherein, the wave power generation apparatus further comprises an engine room having a confined space and installed at a coastal shore and provided for installing the hydraulic motor, the oil tank, the power generation device and at least one control device.

The above and other objects, features and advantages of this disclosure will become apparent from the following detailed description taken with the accompanying drawings.

### BRIEF DESCRIPTION OF THE DRAWINGS

FIG. 1 is a perspective view of a first preferred embodiment of the present invention;
FIG. 1A is a schematic view of a first buoy having a water inlet and a water outlet in accordance with the first preferred embodiment of the present invention;
FIG. 2 is a schematic view of an application of a second preferred embodiment of the present invention;
FIG. 3 is a schematic view of serially combining and concentrating the kinetic energy in accordance with a third preferred embodiment of the present invention;
FIG. 4 is a schematic view of generating and operating the kinetic energy of the present invention;
FIG. 5 is a schematic view of an engine room of the present invention; and
FIG. 6 is a schematic view of a fourth preferred embodiment of the present invention.

### DESCRIPTION OF THE PREFERRED EMBODIMENTS

It is noteworthy that the embodiments are provided for the purpose of illustrating the present invention, but not intended for limiting the scope of the invention.

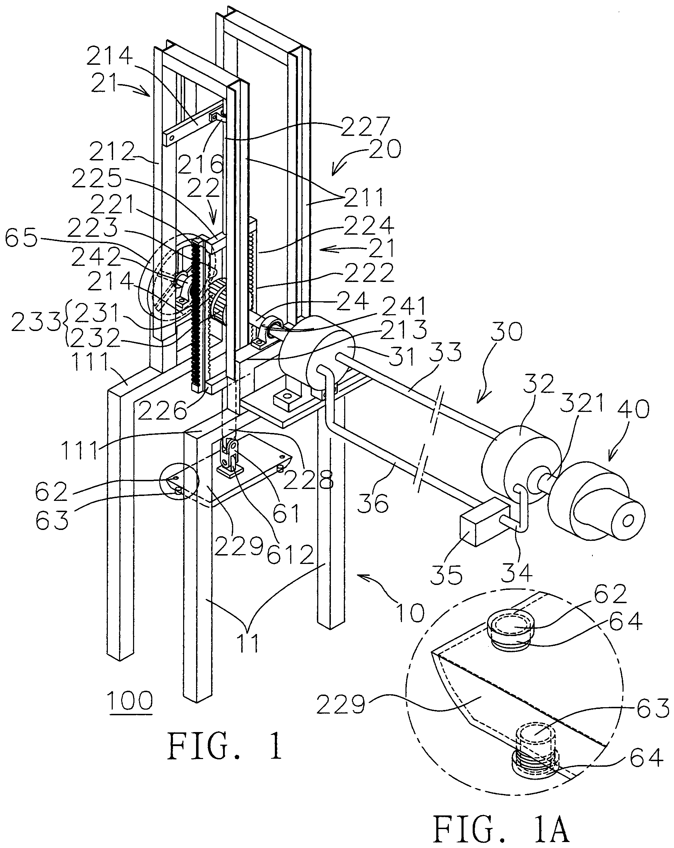

With reference to FIGS. 1 and 1A for a wave power generation apparatus in accordance with the first preferred embodiment of the present invention, the wave power generation apparatus comprises a rack device 10, a linking device 20, a power conversion device 30 and a power generation device 40. The rack device 10 includes a plurality of columns 11 (such as four columns 11 as shown in FIG. 1), and the bottom of the column 11 is fixed to a nearshore seabed 100, and a column connecting portion 111 is connected to the top of two columns 11 for providing a machine setting surface.

The linking device 20 includes two frames 21 installed onto the column connecting portion 111, and the frame 21 comprises a first frame 211 and a second frame 212. In addition, a front frame 213 is connected to a lower position of the two first frames 211, and a rear frame 214 is conneted to both upper and lower positions of the two second frames 212 respectibely, and rear frame 214 connected to the top of the second frame 212 has a bushing 216; a sliding assembly 22 includes a longitudinally installed first sliding element 221, a longitudinally installed second sliding element 222, and an upper connecting element 225 connected and supported between the first sliding elment 221 and the second sliding eleemnt 222, wherein the lower connecting element 226, the first sliding element 221, and the second sliding element 222 are long rods and configured on different longitudinal sides. In other words, the first sliding element 221 and the second sliding element 222 are configured to have a deviation of a horizontal distance, and a first gear slot 223 and a second gear slot 224 are formed on opposite inner sides of the first sliding element 221 and the second sliding element 222 respectively; the upper connecting element 225 is connected to a support shaft 227, and the support shaft 227 is passed to and positioned at the bushing 216, and the lower connecting element 226 is downwardly connected to a push rod 228, and the bottom of the push rod 228 is connected to a first buoy 229, and the first buoy 229 is installed to the plurality of columns 11 and in a direction towards the inside, and the first buoy 229 is made of stainless galvanized iron and wrapped and protected by a glass fiber portion (not shown in the figure) for protecting and preventing the first buoy 229 from being rusted or corroded. In addition, the first buoy 229 has a water inlet 62 for filling water into the first buoy 229, so that the first buoy 229 can contains 1/3 of water. When the wave comes, the first buoy 229 will move up and down. The wave power generation apparatus further comprises a gear set 233 which is a gear mechanism of a one-way transmission (as described in details below). The gear set 233 is installed between the sliding assemblies 22 (including the first sliding element 221 and the second sliding element 222), and the gear set 233 includes a first gear 231 and a second gear 232, wherien the first gear 231 is engaged with the first gear slot 223, and the second gear 232 is engaged with the second gear slot 224, so that the gear set 233 can slide in the sliding assembly 22. The wave power generation apparatus further comprises a rotating shaft 24 passed and installed to the gear set 233 (including the first gear 231 and the second gear 232), and the rotating shaft 24 is positioned by front and rear bearing seats 241, 242, and the bearing seats 241, 242 are fixed to the front frame 213 and the rear frame 214 respectively, so that the rotating shaft 24 is linked by the gear set 233 to rotate unidirectionally.

The power conversion device 30 includes a hydraulic pump 31 transmissively connected to the rotating shaft 24, and the hydraulic pump 31 is connected to a hydraulic motor 32 through an oil output pipe 33, and the hydraulic motor 32 is connected to an oil tank 35 through a first return pipe 34, and the oil tank 35 is connected to the hydraulic pump 31 through a second return pipe 36, and the hydraulic motor 32 is connected to a power generation device 40 through a fixing element 321. Wherein, the rotating shaft 24 isextended into the connected hydraulic pump 31, and the hydraulic motor 32 drives a shaft (not shown in the figure) disposed in the fixing element 321, and the shaft is extended from the hydraulic motor 32 and into the connected power generation device 40. Therefore, when the rotating shaft 24 is rotating, the hydraulic pump 31 converts the mechanical energy of the rotating shaft 24 into an oil pressure, and the oil pressure pumps the oil from the oil output pipe 33 into the connected hydraulic motor 32. The hydraulic motor 32 pumps the oil from the hydraulic pump 31 and converts the oil pressure into mechanical energy to push and rotate the shaft of the hydraulic motor 32, and the used oil flows from the first return pipe 34 and back into the oil tank 35. Until the oil tank 35 is filled up with oil, the oil flows from the second return pipe 36 and back to the hydraulic pump 31, so that the hydraulic pump 31 can pressurize and use the oil repeatedly. The power generation device 40 is rotated by the shaft to generate electric power.

Wherein, the hydraulic pump 31 may be a gear pump, an impeller pump or a piston pump, but the present invention is not limited to the aforementioned ones only; the hydraulic motor 32 may be a gear motor, an impeller motor or a piston motor, but the present invention is not limited to the aforementioned ones only; and the operating principles of the hydraulic pump 31 and the hydraulic motor 32 are prior arts, and thus will not be described in details.

The power generation device 40 converts the kinetic energy provided by the rotating shaft 24 into electric energy by the power conversion device 30, wherein the power generation device 40 may be electrically connected to a battery (not shown in the figure) and provided for storing the converted electric energy.

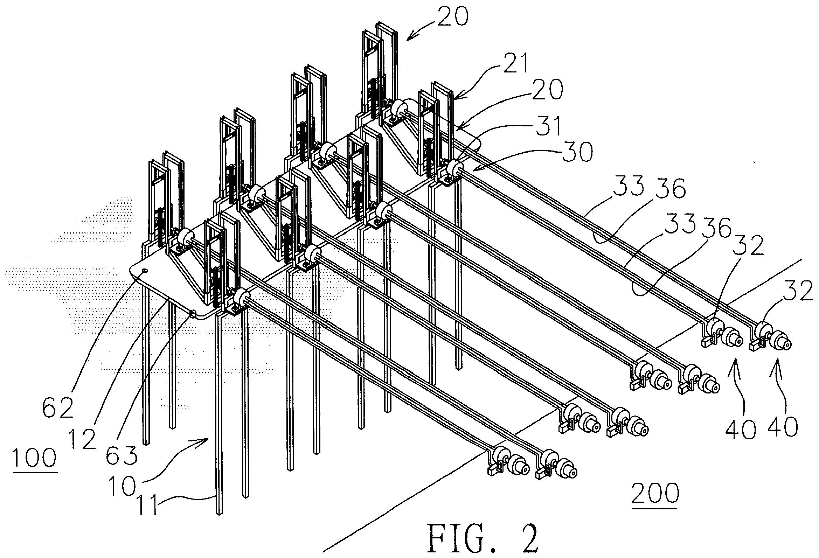

In one of the preferred embodiments, the power generation device 40 is installed at a coastal shore 200 (as shown in FIG. 2).

When the wave power generation apparatus of the present invention is operated, the linking device 20 is installed or connected to the first buoy 229, and the linking device 20 drives the power generation device 40 to generate electric power through the power conversion device 30. When the first buoy 229 is moved up and down by the wave, the kinetic energy of the wave drives the sliding assembly 22 (including the first sliding element 221 and the second sliding element 222) to move up and down through the first buoy 229 and the push rod 228, and then the gear set 233 is engaged. For example, when the first sliding element 221 faces upward, the first gear 231 is engaged, and the rotating shaft 24 is rotated; and when the second sliding element 222 faces upward, the engaged second gear 232 is idle and not linked with the rotating shaft 24. When the second sliding element 222 faces downwrd, the second gear 232 is engaged, and the rotating shaft 24 is rotated. When the first sliding element 221 faces downward, the first gear 231 is engaged and idled, and nnot linited with the rotation of the rotating shaft 24, so taht the rotating shaft 24 is linked by the gear set 233 and maintained to rotate in one direction (or same direction). In other words, the gear set 233 (including the first gear 231 and the second gear 232) is a gear mechanism of a one-way transmission, so that the rotating shaft 24 keeps on rotating in one direction. Therefore, the rotating shaft 24 can be rotated continuously by the up-and-down movement of the wave, and the kinetic energy produced by the rotation of the rotating shaft 24 is transmitted to the power generation device 40 through the power conversion device 30, and the power generation device 40 stores the electric energy converted from the kinetic energy into the battery or outputs the electric energy for use.

Wherein, the bottom of the push rod 228 is connected to the first buoy 229, and a two-way socket 61 is connected, and the top of the two-way socket 61 is pivotally connected to the bottom of the push rod 228, and the bottom of the two-way socket 61 is pivotally connected to a protruding pivot 612 of the first buoy 229, and the pivotally rotating directions of the top and bottom of the two-way socket 61 are perpendicular to each other, so that the bottom of the push rod 228 and the first buoy 229 are movably connected to each other, so that when the first buoy 229 moves to the left or right by the wave, the structure of the push rod 228 will not be damaged easily.

In FIG. 1A, the top of the first buoy 229 at least has a water inlet 62, and water (such as seawater) is filled into the first buoy 229 through the water inlet 62. For example, the first buoy 229 is filled to approximately 2/3 of its capaciity, so that the first buoy 229 can float up and down with the wave, and the bottom of the first buoy 229 at least has a water outlet 63 for discharging any overflow of water out from the first buoy 229 (such as in the condition of having water more than 2/3 of the capacity of the first buoy 229, so that the first buoy 229 can flow up and down with the wave, and both of the water inlet 62 and the water outlet 63 have a screw cap 64 each, and the screw cap 64 may be rotated to lock and close the water inlet 62 or water outlet 63, or unlock and open the water inlet 62 or water outlet 63.

Wherein, the top of the first buoy 229 has a plurality of protruding plates, and the plate has a hole, so that when the weather is bad, such as having a typhoon, the water inlet 62 is provided for filling up the first buoy 229 with water, and then a chain is passed through the hole and tied to a nearby column 11 in order to fix the first buoy 229 and the column 11 and protect the first buoy 229 from being damaged by the bad weather or typhoon.

Wherein, the rotating shaft 24 has a flywheel 65 installed at an end away from the hydraulic pump 31, so that when the rotating shaft 24 is rotating, the flywheel 65 rotates synchronously. The inertia of the rotation of the flywheel 65 makes the rotation of the rotating shaft 24 more smoothly.

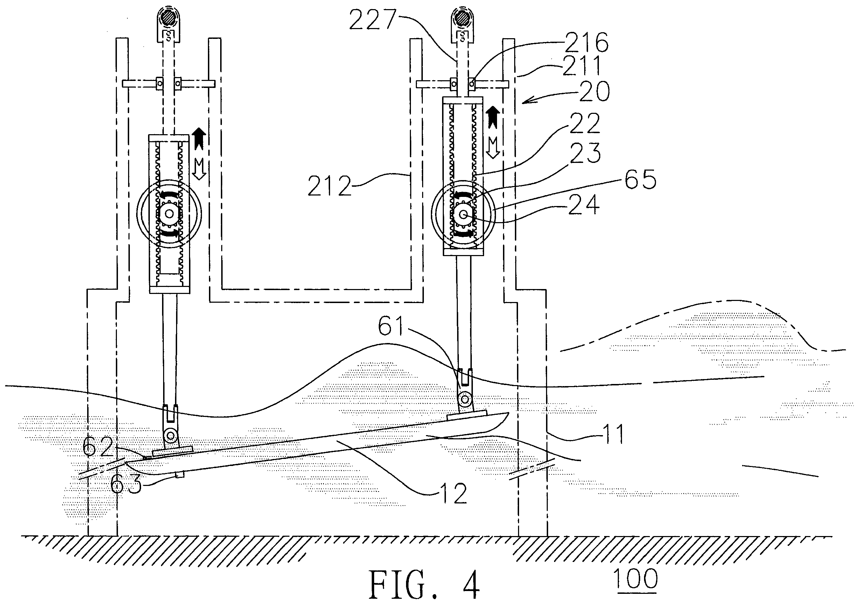

With reference to FIGS. 2 and 4 for a wave power generation apparatus in accordance with the second preferred embodiment of the present invention, this embodiment is substantially the same as the first preferred embodiment, except that this preferred embodiment is configured with a plurality of wave power generation apparatuses, wherein the plurality of linking devices 20 are connected to share a second buoy 12. In other words, the plurality of the aforementioned first buoys 229 are combined to form a second buoy 12 with a large surface area, and the second buoy 12 is installed on the inner side of the plurality of columns 11, so that when the second buoy 12 is set on a sea surface, the second buoy 12 can float and move up and down with the wave. Similarly, the second buoy 12 is made of stainless galvanized iron and wrapped and protected by a glass fiber portion (not shown in the figure), for protecting and preventing the second buoy 12 from being rusted or corroded easily, and the second buoy 12 may be filled with water to approximately 1/3 of its capacity. When the wave comes, the second buoy 12 will move up and down for receiving the wave power source for the power generation.

In this preferred embodiment, the wave power generation apparatus is an upright power generation system such as a rectangular platform with a length of 8 columns 11, a width of 4 columns 11, and a height of 13 meters, and the upright power generation system (including the linking device 20 and the power conversion device 30) is built at the top of the platform. After the columns 11 are constructed, the first buoy 229 is installed among the columns 11, and the first buoy 229 has a length appromately equal to 25 meters, a width approximately equal to 6 meters, and a height approximately equal to 2.3 meters.

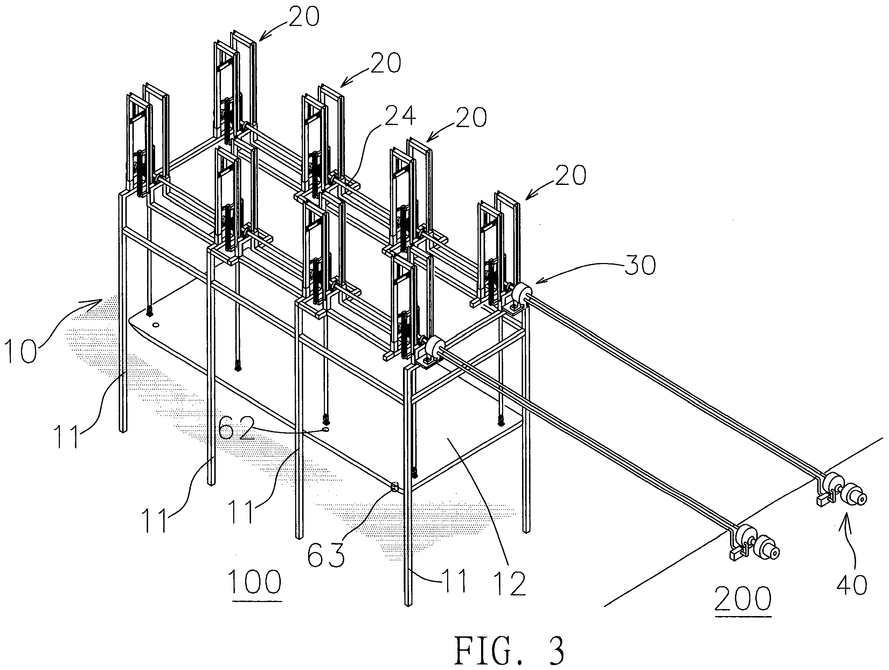

With reference to FIGS. 3 and 4 for a wave power generation apparatus in accordance with the second preferred embodiment of the present invention, this embodiment is substantially the same as the previous embodiment, except that this preferred embodiment serially combines and concentrates the kinetic power of the plurality of wave power generation apparatuses, wherein the plurality of linking devices 20 are installed and combined to share a rotating shaft 24, so that the linking device 20 has a serially combined, concentrated, and strengthened effect of the rotating power of the rotating shaft 24, and the strengthened kinetic energy of the rotating shaft 24 is transmitted to the power generation device 40 through the power conversion device 30, so that the power generation device 40 can produce more electric energy.

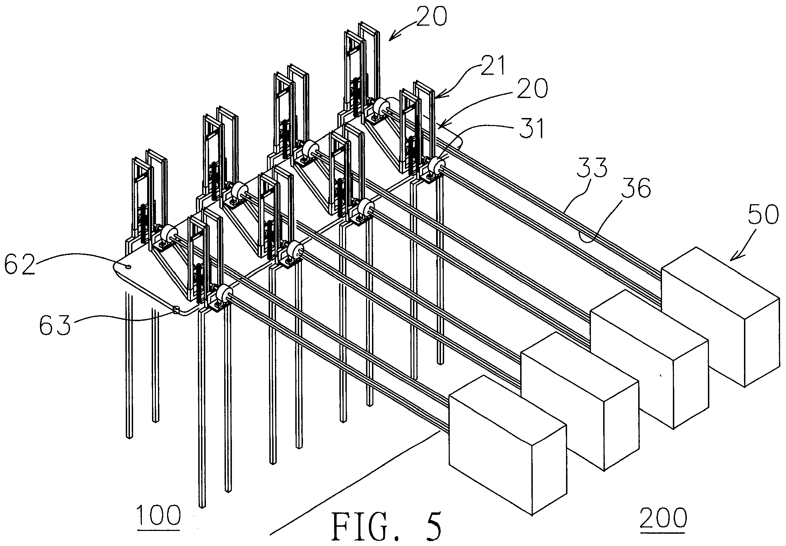

With reference to FIG. 5 a wave power generation apparatus of the present invention, the wave power generation apparatus further comprises an engine room 50 with a confined space, and the engine room 50 is installed at a coastal shore 200 and provided for installing the hydraulic motor 32, the oil tank 35 and the power generation device 40. In other words, the power conversion device 30 just enters into the engine room 50 by the oil output pipe 33 and the second return pipe 36 only, so that after the energy of the sea is absorbed, the energy is guided to the engine room 50 with the confined space to generate electric power, so as to prevent the power generation device 40 and related equipments (such as the hydraulic motor 32, the oil tank 35, etc), and the control device (not shown in the figure) from being corroded or rusted by sea wind and salty moisture.

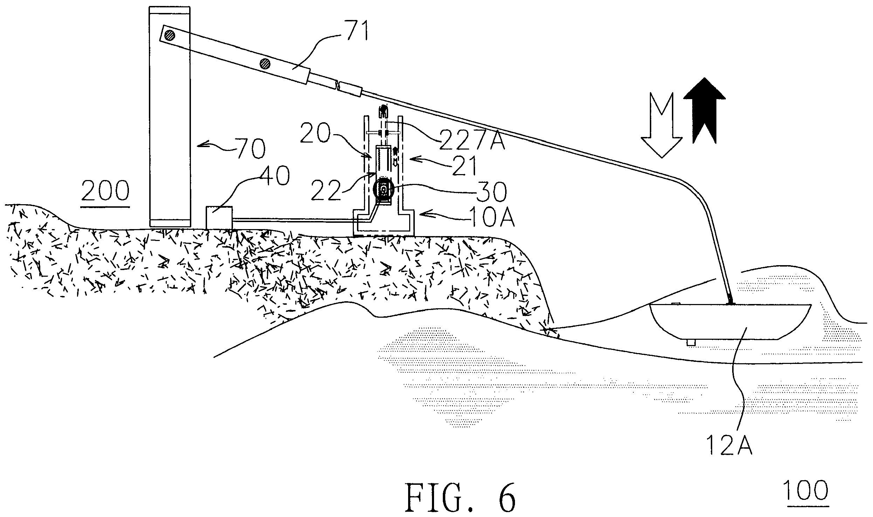

With reference to FIG. 6 for a wave power generation apparatus in accordance with the fourth preferred embodiment the present invention, this embodiment is substantially the same as the first preferred embodiment, except that the rack device 10A, the linking device 20, the power conversion device 30 and the power generation device 40 of this preferred embodiment are installed at a coastal shore 200, and the third buoy 12A is set in the sea. In addition, the wave power genreation apparatus of this embodiment comprises a tall frame 70 installed on the shore 200 and situated at a position farther from the sea than the rack device 10A. In other words, the rack device 10A is disposed between the tall frame 70 and the third buoy 12A, and a pressing rod 71 is pivotally installed to the top of the tall frame 70, and the other end of the pressing rod 71 is connected to the third buoy 12A. In addition, the assembly of the rack device 10A is not limited, and it is mainly used as a component for installing the linking device 20 and the power conversion device 30, and a support shaft 227A of the linking device 20 (or the sliding assembly 22) is connected or pivotally connected to the pressing rod 71, so that when the pressing rod 71 moves up and down with the third buoy 12A, the support shaft 227A and the sliding assembly 22 are linked to move up and down continuously, so as to generate the electric power in the same way as described above. If the plurality of linking devices 20 are installed, the top of each support shaft 227A (or the sliding assembly 22) is connected to the pressing rod 71, so that the linking device 20 forms a serially connected, concentated, strengthened effect of the rotating power produced by the rotating shaft 24.
In summation of the description above, the wave power generation apparatus of the present invention maximizes the up and down floating energy of the wave and converts the floating energy into kinetic energy and serially concentrating the kinetic energy, and finally the power generator converts the kinetic energy into electric energy stably and smoothly, and thus the invention can be applied in the wave power generation industry. In addition, the invention guides the kinetic energy produced by the wave to the engine room with a confined space to generate electric power, so as to prevent important components including the power generation devices and controllers from being damaged, corroded, or rusted by sea wind and salty moisture.

## Claims

1. A wave power generation apparatus, comprising:
a rack device(10), including a plurality of columns(11), and bottom of the columns(11) being fixed to a nearshore seabed(100), and the top of at least two columns(11) being connected to a column connecting portion(111);
at least one linking device(20), installed onto the rack device(10), and including at least one frame(21);
a sliding assembly(22) installed to the frame(21), and inlcuding a longitudinally installed first sliding element(221) and a longitudianlly installed second sliding element(222), and a first gear slot(223) and a second gear slot(224) formed on opposite inner sides of the first sliding element(221) and the second sliding element(222) respectively;
a first buoy(229) connected to the bottom of the frame(21);
a gear set(233), including a first gear(231) and a second gear(232), and the first gear(231) being engaged and connected to the first gear slot(223), and the second gear(232) being engaged and connected to the second gear slot(224), so that the gear set(233) is slidable in the sliding assembly(22);
a rotating shaft(24), passed and installed to the gear set(233), and linked by the gear set(233) for a one-way rotation;
a power conversion device(30), transmissively connected to the rotating shaft(24); and
a power generation device(40), transmissively connected to the power conversion device(30) to generate electric power.

2. The wave power generation apparatus of claim 1, wherein the power generation device(40) is installed on a shore(200) and further comprises an engine room(50) having a confined space and installed at a coastal shore(200), for installing the power generation device(40) and at least one control device.

3. The wave power generation apparatus of claim 2, wherein the frame(21) comprises a first frame(211) and a second frame(212), and the frame(21) has at least one bearing seat(241) for passing and positioning the rotating shaft(24), and an upper connecting element(225) and a lower connecting element(226) installed between the first sliding element(221) and the second sliding element(222), and the first sliding element(221) and the second sliding element(222) is configured to have a deviation of a horizontal distance, and the upper connecting element(225) is connected to a support shaft(227), and the support shaft(227) is passed and positioned at a bushing(216) of the frame(21), and the lower connecting element(226) is downwardly connected to a push rod(228), and the bottom of the push rod(228) is connected to the first buoy(229), and the gear set(233) is a gear mechanism of a one-way transmission.

4. The wave power generation apparatus of claim 3, wherein the first buoy(229) is made of stainless galvanized iron, and the top of the first buoy(229) at least has a water inlet(62), and the bottom of the first buoy(229) at least has a water outlet(63), and the exterior of the first buoy(229) is wrapped and protected by a glass fiber portion.

5. The wave power generation apparatus of claim 4, wherein the power conversion device(30) includes a hydraulic pump(31) transmissively connected to the rotating shaft(24), and the hydraulic pump(31) is connected to a hydraulic motor(32) through an oil output pipe(33), and the hydraulic motor(32) is connected to an oil tank(35) through a first return pipe(34), and the oil tank(35) is connected to the hydraulic pump(31) through a second return pipe(36), and the hydraulic motor(32) is connected to the power generation device(40) through a fixing element(34), and the rotating shaft(24) is extended into the hydraulic pump(31), and the hydraulic motor(32) drives a shaft disposed in the fixing element(32), and the shaft is extended out from the hydraulic motor(32) and into the connected power generation device(40) to link with the power generation device(40) to generate electric power.

6. The wave power generation apparatus of claim 5, further comprising a plurality of linking devices(20), and each first buoy(229) of the plurality of linking devices(20) forming a second buoy(12).

7. The wave power generation apparatus of claim 5, further comprising a plurality of linking devices(20) jointly passed and installed to the rotating shaft(24), so that the linking devices(20) provide a serially connected, concentrated, and strengthened effect of the rotating power produced by the rotating shaft(24).

8. The wave power generation apparatus of claim 7, wherein the bottom of the push rod(228) is connected to the first buoy(229) by a two-way socket(61), and the upper end of the two-way socket(61) is pivotally connected to the bottom of the push rod(228), and the lower end of the two-way socket(61) is pivotally connected to a protruding pivot(612) of the first buoy(229), and the pivoting directions of both upper and lower ends of the two-way socket(61) are perpendicular to each other.

9. The wave power generation apparatus of claim 8, wherein the rotating shaft has a flywheel(65) installed at an end away from the hydraulic pump(31), so that when the rotating shaft(24) is rotating, the flywheel(65) will rotate synchronously.

10. A wave power generation apparatus, comprising:
a tall frame(70), installed at a shore(200), and having a pressing rod(71) pivotally installed to the top of the tall frame(70);
a third buoy(12A), installed in a nearshore sea, and connected to the other end of the pressing rod(71) opposite to the tall frame(70);
a rack device(10A), installed at a coastal shore(200), and disposed between the tall frame(70) and the third buoy(12A);
at least one linking device(20), installed onto the rack device(10A), and including at least one sliding assembly(22), and the top of the sliding assembly(22) being connected to the pressing rod(71), and the sliding assembly(22) including a longitudinally installed first sliding element(221) and a longitudinally installed second sliding element(222), and the first sliding element(221) and the second sliding element(222) having a first gear slot(223) and a second gear slot(224) formed on opposite inner sides of the first sliding elment(221) and the second sliding elment(222) respectively;
a gear set(233), including a first gear(231) and a second gear(232), and the first gear(231) being engaged with the first gear slot(223), and the second gear(232) being engaged with the second gear slot(224), so that the gear set(233) can slide in the sliding assembly(22);
a rotating shaft(24), passed and installed to the gear set(233), and linked by the gear set(233) for a one-way rotation;
a power conversion device(30), installed at the shore(200), and transmissively connected to the rotating shaft(24); and
a power generation device(40), installed at the shore(200), and transmissively connected to the power conversion device(30) for generating electric power.

11. The wave power generation apparatus of claim 10, further comprising an upper connecting element(225) and a lower connecting element(226) installed between the first sliding element(221) and the second sliding element(222), and the first sliding element(221) and the second sliding element(222) being configured to have a deviation of a horizontal distance, and the upper connecting element(226) having a support shaft(227) connected to the pressing rod(71), and the gear set(233) being a gear mechanism of a one-way transmission.

12. The wave power generation apparatus of claim 11, wherein the third buoy(12A) is made of stainless galvanized iron, and the top of the third buoy(12A) at least has a water inlet(62), and the bottom of the third buoy(12A) at least has a water outlet(63), and the exterior of the third buoy(12A) is wrapped and protected by a glass fiber portion.

13. The wave power generation apparatus of claim 12, wherein the power conversion device(30) includes a hydraulic pump(31) transmissively connected to the rotating shaft(24), and the hydraulic pump(30) is connected to a hydraulic motor(32) through an oil output pipe(33), and the hydraulic motor(32) is connected to an oil tank(35) through a first return pipe(34), and the oil tank(35) is connected to the hydraulic pump(30) through a second return pipe(36), and the hydraulic motor(32) is connected to the power generation device(40) through a fixing element(34), and the rotating shaft(24) is extended into the hydraulic pump(31), and the hydraulic motor(32) drives a shaft disposed in the fixing element(32), and the shaft is extended out from the hydraulic motor(32) and into the connected power generation device(40) to link the power generation device(40) to generate electric power.

14. The wave power generation apparatus of claim 13, comprising a plurality of linking devices(20) with the top connected to the pressing rod(71), so that the linking devices(20) form a serially connected, concentrated, and strengthened effect of the rotating power produced by the rotating shaft(24).

15. The wave power generation apparatus of claim 14,further comprising an engine room(50) having a confined space and installed at a coastal shore(200) and provided for installing the hydraulic motor(32), the oil tank(35), the power generation device(40) and at least one control device.
